# EUROPEAN PATENT APPLICATION

(11) **EP 2 249 330 A1**
(43) Date of publication of application: **10.11.2010**
(21) Application number: 09713543.8
(22) Date of filing: 20.02.2009
(51) Int. Cl.: G09F 9/00, G02B 1/11, G02B 5/30, G02F 1/1335, G02F 1/1347

(54) **DISPLAY DEVICE**

(30) Priority: 22.02.2008 JP 2008042054
(71) Applicant: Sharp Kabushiki Kaisha, Osaka-shi, Osaka 545-8522 (JP)
(72) Inventor: NINOMIYA, Ikuo, Osaka-shi, Osaka 545-8522 (JP); YAMADA, Nobuaki, Osaka-shi, Osaka 545-8522 (JP); TSUDA, Kazuhiko, Osaka-shi, Osaka 545-8522 (JP); SAKAI, Akira, Osaka-shi, Osaka 545-8522 (JP)
(74) Representative: Müller - Hoffmann & Partner
(86) International application number: PCT/JP2009/000739
(87) International publication number: WO 2009/104414

(57) **Abstract**

A display device **100A** of the present invention includes a display panel **20A;** an optical plate **10** placed on a viewer side of the display panel **20A** with the intervention of an air layer **32;** and an antireflection layer **18** placed on a viewer side of the optical plate **10,** the antireflection layer **18** having a motheye structure over its surface. The optical plate **10** includes a plastic layer **12** configured to transmit visible light, a quarter-wave layer **14** placed on a viewer side of the plastic layer **12,** and a polarizing layer **16** placed on a viewer side of the quarter-wave layer **14,** the polarizing layer **16** being configured to transmit a linear polarization. The display device **100A** is more suitable to mobile applications than the conventional devices.

## Description

### TECHNICAL FIELD

The present invention relates to a display device and specifically to a display device which is preferably used in mobile applications.

### BACKGROUND ART

The display quality of display devices is degraded by external light. In particular, middle-size and small-size display devices for use in mobile electronic devices (for example, mobile phones and PDAs) are frequently used in bright environments. For example, even under an overcast sky, the brightness is about 40,000 lux. In a midsummer sunshine outdoor environment, the brightness is as much as about 100,000 lux.

When a display device is viewed in such a bright environment, external light reflected by the surface or internal constituents of the display device (reflected light) merges into the display light that outgoes from the display device, so that the display quality degrades. The external light includes components from the whole wavelength range of visible light (λ = 380 nm to 780 nm). Thus, for example, when a character displayed in red is viewed in the presence of external light, the color of red appears faint due to the reflected light.

In the case of a display device for use in mobile applications, to protect a display panel (for example, a liquid crystal display panel, an organic EL display panel, or an electrophoretic display panel) from an external force, a plastic plate (hereinafter, sometimes referred to as "protector plate") is placed over the front face of the display panel (i.e., on the viewer side). Provision of the protector plate forms another interface between the air and the protector plate, so that reflection by the front surface and the rear surface of the protector plate increases the reflectance of the entire display device by about 8%. As a result, the display quality (e.g., contrast ratio) in bright environments further degrades.

Reflected light which can degrade the display quality may also be generated inside the display panel as well as by the surfaces of the display panel and the protector plate. For example, in a liquid crystal display panel, there is a great difference in refractive index between the metal films which form wires or ITO (indium tin oxide; refractive index = about 2.0) which forms pixel electrodes and the glass substrate, liquid crystal layer, or alignment films. Therefore, the interfaces between these constituents reflect external light. In an organic EL display panel, scattering and reflection by phosphor materials are large. When the organic EL display panel is used in bright environments, the display quality degrades for the same reasons as those described above. Also, in a plasma display panel, reflection by the phosphor materials degrades the display quality.

A known method of reducing such reflected light is placing a circular polarizer over the front face of the display panel (see, for example, Patent Document 1). The circular polarizer includes a quarter-wave layer and a polarizing layer which is configured to transmit a linear polarization. The most popular circular polarizer is configured such that the transmission axis of the polarizing layer and the slow axis of the quarter-wave layer form an angle of 45°. Another known circular polarizer further includes a half-wave layer in order to obtain a wider wavelength range (see, for example, Patent Document 2). When a retarder layer which has an in-plane retardation (for example, a half-wave layer described in Patent Document 2) is provided in addition to the quarter-wave layer, arrangement of the slow axes of the quarter-wave layer and the other retarder layers may be appropriately determined.

Patent Document 3 discloses a configuration wherein the space between the display panel and the protector plate is filled with a gel material of a matched refractive index, whereby reflection by the rear surface of the protector plate (the surface on the display panel side) and reflection by the front surface of the display panel are reduced.

As the technique of preventing surface reflection, a motheye structure (see, for example, Patent Document 4) has been receiving attention in recent years. Patent Document 5 discloses a polarizer which has a motheye structure over its surface. The entire disclosures of Patent Document 4 are incorporated by reference in this specification.
Patent Document 1: Japanese Laid-Open Patent Publication No. 8-321381
Patent Document 2: Japanese Laid-Open Patent Publication No. 2002-31721
Patent Document 3: Japanese Laid-Open Patent Publication No. 2004-272059
Patent Document 4: Japanese PCT National Phase Laid-Open Publication No. 2001-517319
Patent Document 5: Japanese Laid-Open Patent Publication No. 2003-302532

### DISCLOSURE OF INVENTION

### PROBLEMS TO BE SOLVED BY THE INVENTION

As described above, display devices for use in mobile applications are frequently used in bright environments and are therefore required to reduce reflection. Also, it is necessary to sufficiently protect the display panel from an external force.

For example, employing the configuration described in Patent Document 3 enables reduction of reflection from the front surface of the display panel and from the rear surface of the protector plate, and also enables dispersion and absorption of an external force by the gel material. However, there is a problem that, if a large external force, for example, an external force which can cause the protector plate to be in contact with the front surface of the display panel, is exerted, the external force cannot be sufficiently dispersed or absorbed by the gel material. It is not necessarily easy to match the refractive index of the gel material with both the constituent that constitutes the front surface of the display panel and the protector plate.

On the other hand, in the configuration which uses the circular polarizer, the effect of reducing reflected light is obtained. However, disadvantageously, reflection still occurs at the outermost surface of the circular polarizer, and the utilization efficiency of light decreases. Since the display devices for use in mobile applications may also be used in dark environments as well as bright environments, employing the configuration which uses the circular polarizer will lead to a problem of decreased display luminance in dark environments.

One of the objects of the present invention is to solve at least any one of the above problems and provide a display device which is more suitable to mobile applications than the conventional display devices.

### MEANS FOR SOLVING THE PROBLEMS

A display device of the present invention includes: a display panel; an optical plate placed on a viewer side of the display panel with the intervention of an air layer; and an antireflection layer placed on a viewer side of the optical plate, the antireflection layer having a motheye structure over its surface, wherein the optical plate includes a plastic layer configured to transmit visible light, a quarter-wave layer placed on a viewer side of the plastic layer, and a polarizing layer placed on a viewer side of the quarter-wave layer, the polarizing layer being configured to transmit a linear polarization.

In one embodiment, the plastic layer is a half-wave layer.

In one embodiment, the plastic layer has an in-plane retardation, the in-plane retardation being not more than 40 nm (i.e., 40 nm at the maximum), and a slow axis of the plastic layer is generally perpendicular to or generally parallel to a transmission axis of the polarizing layer.

In one embodiment, the display panel is a liquid crystal display panel, and the liquid crystal display panel does not have a polarizing layer on the optical plate side.

In one embodiment, the display device further includes a seal portion between the liquid crystal display panel and the optical plate, the seal portion having a hole which provides a communication between the air layer and outside air.

A display device of the present invention includes: a display panel; a liquid crystal cell placed on a viewer side of the display panel, a retardation of the liquid crystal cell being variable within a range which includes a quarter wavelength of visible light; a polarizing layer placed on a viewer side of the liquid crystal cell, the polarizing layer being configured to transmit a linear polarization; and an antireflection layer placed on a viewer side of the polarizing layer, the antireflection layer having a motheye structure over its surface.

In one embodiment, the liquid crystal cell has flexibility and is placed on the viewer side of the display panel with the intervention of an air layer.

The display device of one embodiment further includes a half-wave layer between the display panel and the liquid crystal cell.

### EFFECTS OF THE INVENTION

The present invention provides a display device which is more resistant to an external force than the conventional devices, or in which the degradation in display quality due to reflected light is smaller than in the conventional devices. Also, the present invention provides a display device which is capable of providing higher display luminance when used in dark environments than the conventional display devices.

### BRIEF DESCRIPTION OF DRAWINGS

[FIG. **1**] **(a)** and **(b)** are diagrams showing a configuration of a liquid crystal display device **100A** that is an embodiment of the present invention. **(a)** is a schematic cross-sectional view. **(b)** is a schematic plan view.
[FIG. **2**] **(a)** is a schematic cross-sectional view of an antireflection layer **18** that has a motheye structure. **(b)** is a diagram schematically showing the refractive index distribution of an antireflection layer **18** along the thickness direction.
[FIG. **3**] A schematic cross-sectional view of a liquid crystal display device **100B** that is another embodiment of the present invention.
[FIG. **4**] Diagrams for illustrating a configuration and an operation of a liquid crystal display device **200** that is still another embodiment of the present invention. **(a)** is a schematic cross-sectional view for illustrating a state of a liquid crystal display device **200** in which a liquid crystal cell **54** functions as a quarter-wave layer. **(b)** is a schematic cross-sectional view for illustrating another state of the liquid crystal display device **200** in which the liquid crystal cell **54** does not have a retardation.

### DESCRIPTION OF THE REFERENCE NUMERALS

- **10**: optical plate
- **12**: plastic layer
- **14**: quarter-wave layer
- **16**: polarizing layer
- **18**: antireflection layer with motheye structure
- **20A, 20B**: liquid crystal display panel
- **22a, 22b**: substrate
- **23**: liquid crystal layer
- **26a, 26b**: polarizing layer
- **32**: air layer
- **34**: seal portion
- **34a**: hole of seal portion
- **40**: backlight unit
- **42**: light source
- **44**: reflector mirror
- **46**: light guide plate
- **48**: reflector plate
- **100A, 100B**: liquid crystal display device

### BEST MODE FOR CARRYING OUT THE INVENTION

Hereinafter, a configuration of a display device that is an embodiment of the present invention is described with reference to the drawings. In the descriptions below, a liquid crystal display device will be illustrated. However, the embodiment of the present invention is not limited to liquid crystal display devices but may be applicable to known display devices, such as organic EL display devices, electrophoretic display devices, SED display devices, plasma display devices, etc. Common components will be indicated by common reference numerals, and the descriptions thereof may sometimes be omitted.

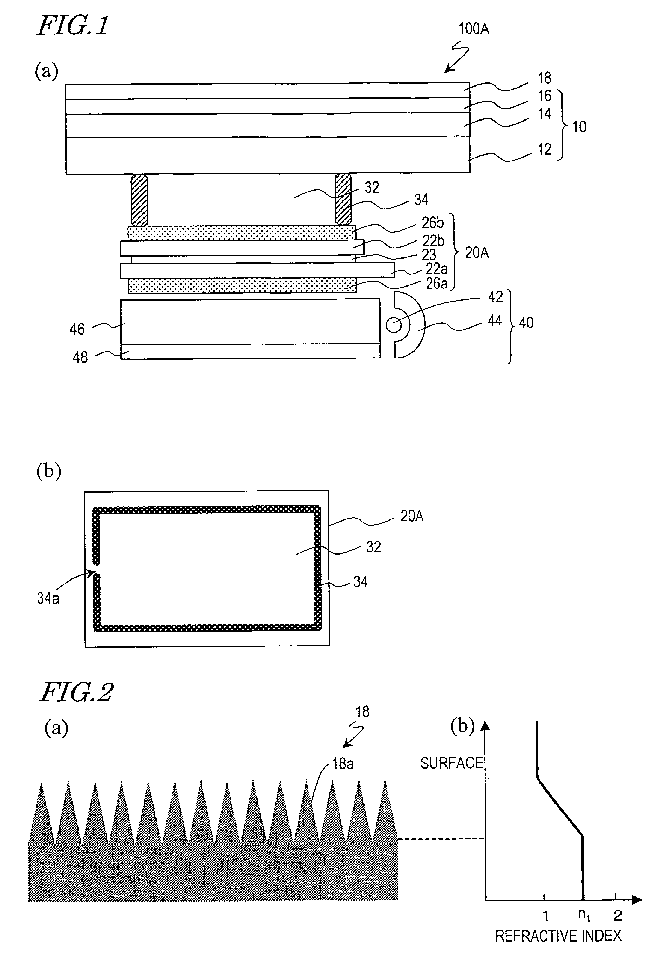

FIGS. **1(a)** and **1(b)** show a configuration of a liquid crystal display device **100A** that is an embodiment of the present invention. FIG. **1(a)** is a schematic cross-sectional view. FIG. **1(b)** is a schematic plan view.

The liquid crystal display device **100A** includes a display panel **20A,** an optical plate **10** which is placed on the viewer side of the display panel **20A** with the intervention of an air layer **32,** and an antireflection layer **18** which is placed on the viewer side of the optical plate **10** and which has a motheye structure over its surface.

The optical plate **10** includes a plastic layer **12** which is configured to transmit visible light, a quarter-wave layer **14** which is placed on the viewer side of the plastic layer **12,** and a polarizing layer **16** which is placed on the viewer side of the quarter-wave layer **14** and which is configured to transmit a linear polarization. For example, by using a half-wave layer as the plastic layer **12,** the optical plate **10** can have excellent antireflection characteristics over a wide wavelength range and a wide angular range as described in Patent Document 2. The wavelength dispersion of the retardation of the half-wave layer is preferably inverse to the wavelength dispersion of the retardation of the quarter-wave layer **14.** Such a combination with the half-wave layer enables the optical plate **10** to function as an excellent broadband circular polarizer. Note that, when necessary, an adhesive layer may be provided between the plastic layer **12** and the quarter-wave layer **14** or between the quarter-wave layer **14** and the polarizing layer **16,** but it will be omitted from the following description for the sake of simplicity.

Here, the display panel **20A** is a liquid crystal display panel. As shown, the liquid crystal display panel **20A** includes a pair of substrates **22a** and **22b,** a liquid crystal layer **23** interposed between the pair of substrates **22a** and **22b,** and polarizing layers **26a** and **26b** which oppose each other with the substrates **22a** and **22b** and the liquid crystal layer **23** interposed therebetween. As a matter of course, any one of a wide variety of known liquid crystal display panels may be used.

The rear surface side of the liquid crystal display panel **20A** is provided with a backlight unit **40.** The backlight unit **40** is of, for example, an edge light type, which includes a light source (e.g., LED or cathode ray tube) **42,** a reflector mirror **44,** a light guide plate **46,** and a reflector plate **48.**

The liquid crystal display device **100A** includes the air layer **32** between the display panel **20A** and the optical plate **10.** The air layer **32** provides a space which allows the optical plate **10** to deform when an external force is exerted on the optical plate **10.** The deformation of the optical plate **10** disperses and absorbs the external force, so that the display panel **20A** is protected. Since the air layer **32** is provided between the display panel **20A** and the optical plate **10,** the optical plate **10** effectively functions as a protector plate against a large external force, as compared with a configuration which includes a layer formed of a gel material as in the display device described in Patent Document 3.

The thickness of the air layer **32,** i.e., the gap between the display panel **20A** and the optical plate **10,** is defined by a seal portion **34** so as to be a predetermined thickness and maintained by the seal portion **34.** The thickness of the air layer **32** is preferably 10 µm or more. If less than 10 µm, light rays reflected by the inner interfaces of the air layer **32** may cause mutual interference and degrade the display quality. To sufficiently carry out the function of absorbing and dispersing the external force, the air layer **32** preferably has a large thickness. Further, the air layer **32** preferably has a sufficiently large thickness such that the above-described interference phenomenon does not occur even when depressed. In view of such, the thickness of the air layer **32** is more preferably 500 µm or more. Although the upper limit of the thickness of the air layer **32** is not specified herein, increasing the thickness of the air layer **32** to more than 2 mm brings no advantage in view of the above and disadvantageously increases the thickness of the display device. Thus, it is preferably 2 mm or less.

If an external material is present between the display panel **20A** and the optical plate **10,** it is difficult to remove the external material, or there is a high probability that the external material will form a bright spot in the display. To prevent such disadvantages, the seal portion **34** is preferably formed all around the perimeter of the air layer **32,** provided that the seal portion **34** has a hole **34a** which provides a communication between the air layer **32** and outside air. To prevent entry of an external material into the air layer **32** via the hole **34a,** the hole **34a** may be filled with, for example, a porous fiber which has small pores. Note that the seal portion **34** can be formed of a known sealant for use in liquid crystal display panels.

The refractive index of the air layer **32** is 1.0. The difference in refractive index between the air layer **32** and the uppermost layer of the display panel **20A** (herein, the polarizing layer **26b)** and the difference in refractive index between the air layer **32** and the plastic layer **12** of the optical plate **10** are large. The reflectances at these interfaces are higher than those in the configuration described in Patent Document 3. However, the liquid crystal display device **100A** includes the antireflection layer **18** that has the motheye structure, and therefore, as described above, all the reflected light, including the internal reflection of the display panel **20A,** are prevented from outgoing toward the viewer side. Thus, the degradation in display quality of the liquid crystal display device **100A** due to the reflected light is rather smaller than in a case where the configuration described in Patent Document 3 is employed.

Now, a configuration and a function of the antireflection layer **18** included in the liquid crystal display device **100A** are described with reference to FIGS. **2(a)** and **2(b).** FIG. **2(a)** is a schematic cross-sectional view of the antireflection layer **18** that has a motheye structure. FIG. **2(b)** is a diagram schematically showing the refractive index distribution of the antireflection layer **18** along the thickness direction.

Conventionally, a coating film formed of a low refractive index material has been commonly known as one example of antireflection films. However, the reflectance of a surface provided with the low refractive index coating film is from about 1.5% to about 2%. Also, an antireflection film formed by a dielectric multilayered film has been known. When this is used, the reflectance can be decreased to a value from about 0.3% to about 1%, although it depends on the configuration of the dielectric multilayered film (the number of layers and the refractive indices of the respective layers). However, when the dielectric multilayered film is used, the film disadvantageously appears tinted because the reflectance varies depending on the wavelength.

Unlike these conventional antireflection films, the antireflection layer **18** has a motheye structure over its surface so that the reflectance can be decreased to 0.2% or less. Also, the antireflection layer **18** has no wavelength dispersion of the reflectance and therefore does not appear tinted.

The motheye structure is **characterized in that** it has minute protrusions **18a** as schematically shown in FIG. **2(a)****,** which are not greater than the wavelengths of visible light (λ = 380 nm to 780 nm), and as a result, the refractive index continuously changes from the surface to the inner part as shown in FIG. **2(b)****.** For example, the antireflection layer **18** has a configuration wherein a large number of conical protrusions **18a,** each of which has a height of about 200 nm, are provided over the surface with the pitch of about 200 nm. The refractive index of the antireflection layer **18** continuously changes from its surface, i.e., from the refractive index of air, 1.0, to the refractive index of the material of the antireflection layer **18,** n₁ (e.g., 1.5). The change of the refractive index can be controlled by modifying the cross-sectional shape of the protrusions **18a.** To obtain a sufficient antireflection effect, the height and pitch of the protrusions **18a** are preferably 500 nm or less, and more preferably 200 nm or less. In terms of prevention of interference, it is preferable that the two-dimensional arrangement of the protrusions 18a does not have regularity. The "pitch" means the distance between adjacent protrusions **18a.**

The plastic layer **12** of the optical plate **10** is not limited to the half-wave layer. Note that the plastic layer **12** has an in-plane retardation, and if the value of the in-plane retardation exceeds 40 nm, the optical plate **10** may not function as an excellent circular polarizer, so that leakage of the reflected light occurs. Thus, when the plastic layer **12** is simply used as a protecting layer, it is preferable that the in-plane retardation is not more than 40 nm, and that the slow axis is generally perpendicular to or generally parallel to the transmission axis (or "polarization axis") of the polarizing layer **16.**

As described above, in the liquid crystal display device **100A,** the optical plate **10,** which is placed with the intervention of the air layer **32,** functions as both a protector plate and a circular polarizer. The function of the air layer **32** of dispersing and absorbing an external force is higher than those of gel materials, and therefore, the liquid crystal display device **100A** is more resistant to an external force than the conventional devices. Since the optical plate **10** functions as a circular polarizer, reflected light generated inside the display panel **20A** can be prevented from being observed. Further, since the front surface of the optical plate **10** is provided with the antireflection layer **18** that has the motheye structure, reflection by the front surface of the optical plate **10** can be prevented.

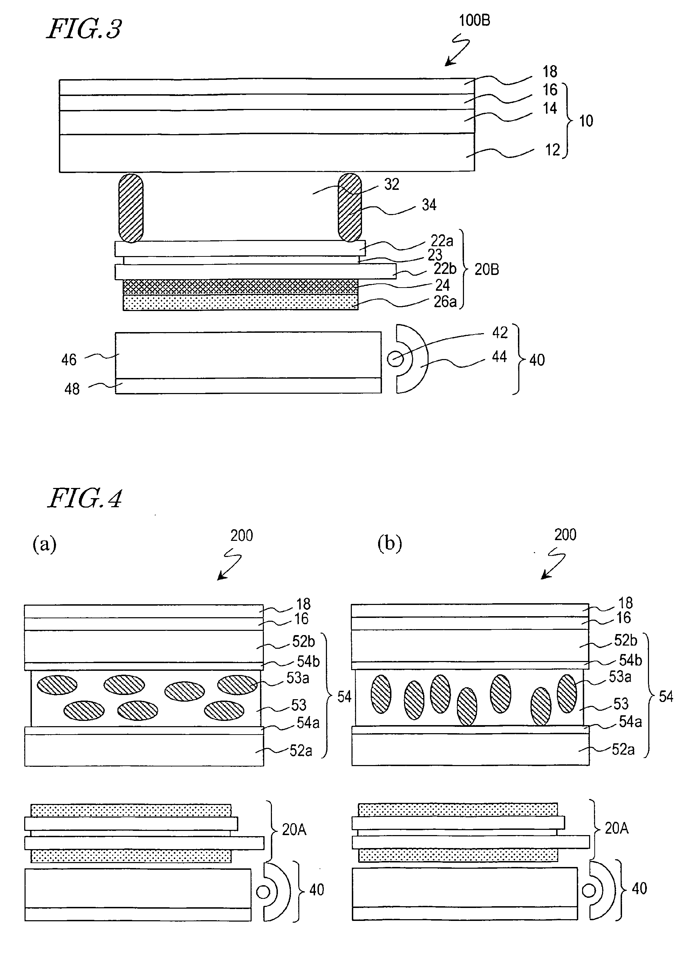

Next, a configuration of a liquid crystal display device **100B** that is another embodiment of the present invention is described with reference to FIG. 3.

The liquid crystal display device **100B** is different from the liquid crystal display device **100A** in that a liquid crystal display panel **20B** does not have a polarizing layer on the optical plate **10** side. FIG. **3** is a schematic cross-sectional view of the liquid crystal display device **100B.**

In the liquid crystal display device **100B,** the polarizing layer on the viewer side (the polarizing layer **26b** in FIG. **1**), which is essentially necessary for the liquid crystal display panel **20B** to perform display, is omitted, but the polarizing layer **16** included in the optical plate **10** is utilized instead. Therefore, in the liquid crystal display device **100B,** there is one polarizing layer in the middle of the path of light that is transmitted through the liquid crystal layer **23** to outgo toward the viewer side, which is one layer fewer than the liquid crystal display device **100A.** As a result, the liquid crystal display device **100B** can perform brighter display than the liquid crystal display device **100A.** In the liquid crystal display device **100A,** light which has been transmitted through the liquid crystal layer **23** and then through the polarizing layer **26b** is a linear polarization whose plane of vibration is parallel to the transmission axis (polarization axis) of the polarizing layer **26b.** This linear polarization is converted to a circular polarization by the quarter-wave layer **14** when it is transmitted therethrough. Thereafter, only a linear polarization component of this circular polarization which has been transmitted through the polarizing layer **16** is used for display. Thus, even if the polarizing layer **16** is an ideal polarizing layer, the light which is utilized for display constitutes 50% of the light which is transmitted through the polarizing layer **26b,** and in actuality, it is about 42%.

As seen from the above, the display luminance can be improved by omitting one polarizing layer.

Note that the liquid crystal display panel **20B** is also different in that it includes a quarter-wave layer **24** on the backlight unit **40** side. However, the quarter-wave layer **24** may be omitted depending on the display mode of the liquid crystal display panel **20B.**

Next, a configuration and an operation of a liquid crystal display device **200** that is still another embodiment of the present invention is described with reference to FIG. **4****.** The liquid crystal display device **200** includes a liquid crystal cell **54** in place of the quarter-wave layer **14** of the liquid crystal display device **100A,** and the plastic layer **12** is omitted. FIG. **4(a)** is a schematic cross-sectional view for illustrating a state of the liquid crystal display device **200** in which the liquid crystal cell **54** functions as a quarter-wave layer. FIG. **4(b)** is a schematic cross-sectional view for illustrating another state of the liquid crystal display device **200** in which the liquid crystal cell **54** does not have a retardation.

The liquid crystal cell **54** is configured such that the retardation of a liquid crystal layer **53** is variable within a range which includes quarter wavelengths of the visible light wavelengths. For example, the liquid crystal cell **54** includes the liquid crystal layer **53,** substrates **52a** and **52b** which oppose each other with the liquid crystal layer **53** interposed therebetween, and a pair of electrodes **54a** and **54b** for applying a voltage across the liquid crystal layer **53.**

For example, when the liquid crystal layer **53** includes a nematic liquid crystal material of positive dielectric anisotropy, liquid crystal molecules **53a** of the liquid crystal layer **53** are aligned generally parallel to the substrates **52a** and **52b** during the absence of an applied voltage across the liquid crystal layer **53** as shown in FIG. **4(a)****.** In this case, the liquid crystal layer **53** functions as a quarter-wave layer on the linear polarization which has been transmitted through the liquid crystal display panel **20A.** Specifically, during the absence of an applied voltage across the liquid crystal layer **53,** the pretilt azimuth of the liquid crystal molecules **53a** forms an angle of 45° with the transmission axis of the polarizing layer **26b** (see FIG. **1**) of the liquid crystal display panel **20A,** and in this situation, the retardation of the liquid crystal layer **53** (which is represented by Δn·d where Δn is the birefringence value of the liquid crystal material and d is the thickness of the liquid crystal layer) is equal to a quarter wavelength. Note that, commonly, the liquid crystal layer is designed on the basis of light at 550 nm with which the luminosity factor is maximum.

When a sufficient voltage is applied across the liquid crystal layer **53,** the liquid crystal molecules **53a** are aligned generally perpendicular to the substrates **52a** and **52b** as shown in FIG. **4(b)****.** In this situation, the retardation of the liquid crystal layer **53** for a light ray which enters the liquid crystal layer **53** in a direction normal to the liquid crystal layer **53** is substantially zero. A linear polarization which has entered the liquid crystal cell **54** then enters the polarizing layer **16** with its polarization state unchanged. In this case, to maximize the utilization efficiency of light, it is preferable that the transmission axis of the polarizing layer **16** is parallel to the transmission axis of the polarizing layer **26b** (see FIG. 1) of the liquid crystal display panel **20A.**

As a matter of course, the relationship between the ON/OFF of the voltage and the retardation of the liquid crystal layer **53** is not limited to the above-described example. For example, the liquid crystal layer **53** may include a nematic liquid crystal material of negative dielectric anisotropy, so that a vertical alignment shown in FIG. **4(b)** occurs during the absence of an applied voltage across the liquid crystal layer **53,** and a horizontal alignment shown in FIG. **4(a)** occurs when a sufficient voltage is applied across the liquid crystal layer **53.**

As described above, when employing a configuration which includes the liquid crystal cell **54** whose retardation is variable within a range which includes quarter wavelengths of the visible light wavelengths in place of the optical plate **10** of the liquid crystal display device **100A,** the liquid crystal cell **54** can be adapted to function as a quarter-wave layer in bright environments and can be adapted so as not to include a quarter-wave layer in dark environments. Therefore, the display luminance in dark environments can be improved. Further, by providing a half-wave layer between the display panel **20A** and the liquid crystal cell **54,** excellent antireflection characteristics can be achieved over a wide wavelength range and a wide angular range when the liquid crystal cell **54** functions as a quarter-wave layer.

As a matter of course, when the liquid crystal cell **54** has a flexible structure and the liquid crystal cell **54** is placed on the viewer side of the display panel **20A** with the intervention of the air layer **32** as shown in FIG. **1**, the effects substantially equal to those of the liquid crystal display device **100A** can be obtained together.

### EXAMPLES

### [Example 1, Comparative Examples 1, 2, 3, and 4]

Liquid crystal display device samples were fabricated which have the same configuration as that of the liquid crystal display device **100A** shown in FIG. **1**. The plastic layer **12** was a COP (cycloolefin polymer) sheet having a thickness of 0.5 mm, which was produced by injection molding. This COP sheet had the slow axis in a resin flow direction. The retardation of the COP sheet was 28 nm. Here, the COP sheet was used as a protecting layer.

As the quarter-wave layer **14,** a stretched film of COP was used. The retardation of this COP stretched film for the wavelength of 550 nm was 138 nm.

The constituents were arranged such that the slow axis (or fast axis) of the plastic layer **12** and the transmission axis of the polarizing layer **16** are parallel to each other, and the slow axis of the quarter-wave layer **14** forms an angle of 45° with the transmission axis of the polarizing layer **16.**

Further, over the surface of the polarizing layer **16,** the antireflection layer **18** which has a structure wherein the refractive index continuously changes from its surface (motheye structure) was formed using a method disclosed in Japanese PCT National Phase Laid-Open Publication No. 2003-531962. The refractive index of the material that forms the motheye structure is preferably equal to the refractive index of the polarizing layer **16** as previously described with reference to FIG. **2****.** Since a common refractive index of the polarizing layer **16** is about 1.5, a material with the refractive index of about 1.5 was used as the material that forms the motheye structure. The motheye structure had a large number of conical protrusions **18a,** each of which had a height of about 200 nm, and which were arranged with the pitch (the distance between adjacent protrusions) of about 200 nm.

The reflectance of this motheye structure was 0.15%. For measurement of the reflectance, CM2002 of Olympus Corporation was used.

The optical plate **10** fabricated as described above was placed over the front face of the vertical alignment type liquid crystal display panel **20A** of the transmission type. Here, on the upper surface of the liquid crystal display panel **20A,** the seal portion **34** was formed of a sealant. In this process, a porous fiber with small pores which can provide an air passage was placed in the hole **34a** of the seal portion **34** so as not to make a pressure difference between the inside and the outside of the seal portion **34.** The thickness of the air layer **32** was 1 mm. These constituents and the backlight unit **40** were assembled to obtain a liquid crystal display device of Example 1.

The liquid crystal display device of Comparative Example 1 was the same as the liquid crystal display device of Example 1 except that the antireflection layer **18** at the outermost surface was omitted.

The liquid crystal display device of Comparative Example 2 was the same as the liquid crystal display device of Example 1 except that the quarter-wave layer **14** and the polarizing layer **16** were omitted, and the antireflection layer **18** was directly placed on the plastic layer **12.**

The liquid crystal display device of Comparative Example 3 was the same as the liquid crystal display device of Example 1 except that the quarter-wave layer **14,** the polarizing layer **16,** and the antireflection layer **18** were omitted, and only the plastic layer **12** was provided.

The liquid crystal display device of Comparative Example 4 was the same as the liquid crystal display device of Example 1 except that the slow axis of the plastic layer **12** was coincident with the slow axis of the quarter-wave layer **14.** Note that the transmission axis of the polarizing layer **16** was arranged so as to form an angle of 45° with the slow axis of the quarter-wave layer **14** as in the liquid crystal display device of Example 1.

The reflectance of the entire liquid crystal display device of the above samples was measured (using CM2002 of Olympus Corporation). An illumination system with an integrating sphere was used, in which a photodetector was placed at a position deviated by 8° from a direction vertical to a measurement subject portion. The measurement subject portion was tightly pressed against a circular window provided in the bottom surface of the integrating sphere such that the measurement subject portion is defined as a circle with the diameter of 1 cm. To additionally evaluate the effects of the internal reflection of the display panel, the reflected light including a specular reflection component was measured (SCI measurement mode).

Also, under the assumption of an outdoor environment under an overcast sky, the visual recognizability was evaluated by the human eye at 40,000 lux. In the evaluation of visual recognizability, white characters displayed on a black background were viewed from a position in front of the panel, with the use of a scattering light source with which light rays came from all the directions onto the display surface (room), with the front luminance being 40,000 lux, and it was determined whether or not the white characters were distinguishable. The results are shown in TABLE 1. In TABLE 1, ⊚ means that the characters were clearly distinguishable. Δ means that the characters were somewhat difficult to distinguish. × means that the characters were difficult to distinguish.

As understood from the result of TABLE 1, the liquid crystal display device of Example 1 has a very small reflectance of external light as compared with the liquid crystal display devices of Comparative Examples 1 to 3. Even in the evaluation by the human eye in a bright environment at 40,000 lux, the liquid crystal display device of Example 1 exhibited excellent visual recognizability.

As understood from the comparison between Example 1 and Comparative Example 4, when the plastic layer **12** has a retardation, the slow axis of the plastic layer **12** is preferably parallel to or perpendicular to the transmission axis of the polarizing layer **16.**

**[TABLE 1]**

| Evaluation Items | Example 1 | Comparative Example 1 | Comparative Example 2 | Comparative Example 3 | Comparative Example 4 |
|---|---|---|---|---|---|
| Reflectance (%) | 0.35 | 4.2 | 8.85 | 12.7 | 0.95 |
| Evaluation by Human Eye | ⊚ | × | × | × | △ |

A liquid crystal display device of Comparative Example 5 was the same as the liquid crystal display device of Example 1 except that a layer of a gel material of a matched refractive index was provided in place of the air layer **32,** and the optical plate **10** was directly placed over the front surface of the vertical alignment type liquid crystal display panel **20A.**

In the liquid crystal display devices of Example 1 and Comparative Example 5, the force of 500 gf is exerted on the optical plate **10** using a stick which had the diameter of 3 mm and whose end was made of a hard rubber, while the change in the display due to the force was observed by the human eye. In the liquid crystal display device of Example 1, no change was perceived in the state of the display at the depressed portion, whereas in the liquid crystal display device of Comparative Example 5, a change was perceived in the state of the display at the depressed portion. This is because the layer of the gel material could not sufficiently disperse or absorb the external force so that the thickness of the liquid crystal layer locally changed.

Since in the liquid crystal display device of Example 1 of the present invention the optical plate **10** is placed with the intervention of the air layer **32,** an external force can sufficiently be dispersed and absorbed.

### [Example 2]

A liquid crystal display device sample was fabricated which has the same configuration as that of the liquid crystal display device **100B** shown in FIG. **3****.** A vertical alignment type liquid crystal display panel was used as in Example 1, in which the transmission axis of the polarizing layer **26a** of the liquid crystal display panel **20B** and the transmission axis of the polarizing layer **16** of the optical plate **10** were perpendicular to each other.

As seen from TABLE 2, the reflectance and the result of the evaluation by the human eye were excellent as in the liquid crystal display device of Example 1, and the transmittance was higher than that of the liquid crystal display device of Example 1. Note that the transmittance is expressed as a value relative to the transmittance (luminance) of the liquid crystal display device of Example 1 which is assumed as 1. The liquid crystal display device sample of Example 2 was fabricated in such a manner that constituents commonly used in the liquid crystal display devices of Example 1 and Example 2 were formed of the same materials or formed of the materials from the same lots, and unnecessary parts were omitted.

**[TABLE 2]**

| Items | Example 2 |
|---|---|
| Reflectance (%) | 0.36 |
| Evaluation by Human Eye | ⊚ |
| Transmittance (relative to Example 1 Transmittance = 1) | 1.8 |

### [Example 3]

A liquid crystal display device sample was fabricated which has the same configuration as that of the liquid crystal display device **200** shown in FIG. **4****.** The liquid crystal cell **54** used was a parallel alignment type liquid crystal cell fabricated using a nematic liquid crystal material of positive dielectric anisotropy. In the fabricated parallel alignment type liquid crystal cell, the alignment films were formed by antiparallel rubbing. The retardation of this liquid crystal cell **54** during the absence of an applied voltage was 137 nm. By applying a sufficient voltage, the retardation decreased to 10 nm.

The results of evaluations performed in the presence and absence of an applied voltage across the liquid crystal layer 53 of the liquid crystal cell **54** are shown in TABLE 3. The evaluation of visual recognizability was performed at 40,000 lux (bright environment) and at 100 lux under the assumption of a dark living room (dark environment).

**[TABLE 3]**

| | Absence of Applied Voltage | Presence of Applied Voltage |
|---|---|---|
| Reflectance (%) | 0.72 | 9.85 |
| Visual Recognizability Evaluation (under 40,000 lx) | ○ | × |
| Visual Recognizability Evaluation (under 100 lx) | ○ | ⊚ |
| Transmittance (relative to Example 1 Transmittance = 1) | 0.81 | 1.52 |

As seen from TABLE 3, the liquid crystal display device of Example 3 can realize excellent display by applying a voltage across the liquid crystal cell **54** even in dark environments.

### INDUSTRIAL APPLICABILITY

A display device of the present invention is preferably used as a display device for mobile applications.

## Claims

1. A display device, comprising:
a display panel;
an optical plate placed on a viewer side of the display panel with the intervention of an air layer; and
an antireflection layer placed on a viewer side of the optical plate, the antireflection layer having a motheye structure over its surface,
wherein the optical plate includes
a plastic layer configured to transmit visible light,
a quarter-wave layer placed on a viewer side of the plastic layer, and
a polarizing layer placed on a viewer side of the quarter-wave layer, the polarizing layer being configured to transmit a linear polarization.

2. The display device of claim 1, wherein the plastic layer is a half-wave layer.

3. The display device of claim 1, wherein
the plastic layer has an in-plane retardation, the in-plane retardation being not more than 40 nm, and
a slow axis of the plastic layer is generally perpendicular to or generally parallel to a transmission axis of the polarizing layer.

4. The display device of any of claims 1 to 3, wherein
the display panel is a liquid crystal display panel, and the liquid crystal display panel does not have a polarizing layer on the optical plate side.

5. The display device of any of claims 1 to 4, further comprising a seal portion between the liquid crystal display panel and the optical plate, the seal portion having a hole which provides a communication between the air layer and outside air.

6. A display device, comprising:
a display panel;
a liquid crystal cell placed on a viewer side of the display panel, a retardation of the liquid crystal cell being variable within a range which includes a quarter wavelength of visible light;
a polarizing layer placed on a viewer side of the liquid crystal cell, the polarizing layer being configured to transmit a linear polarization; and
an antireflection layer placed on a viewer side of the polarizing layer, the antireflection layer having a motheye structure over its surface.

7. The display device of claim 6, wherein the liquid crystal cell has flexibility and is placed on the viewer side of the display panel with the intervention of an air layer.

8. The display device of claim 6, further comprising a half-wave layer between the display panel and the liquid crystal cell.
